(19) Europäisches Patentamt

European Patent Office

Office européen des brevets

(11) **EP 1 717 212 A1**

(12) **EUROPEAN PATENT APPLICATION**

(43) Date of publication:
**02.11.2006 Bulletin 2006/44**

(51) Int Cl.:
***C03B 37/014*** (2006.01)

(21) Application number: **06113089.4**

(22) Date of filing: **25.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.04.2005 US 118818**

(71) Applicant: **THE BOC GROUP, INC.**
**New Providence, New Jersey 07974 (US)**

(72) Inventor: **Shirley, Arthur Irving**
**Hillsborough, NJ 08844-2251 (US)**

(74) Representative: **Wickham, Michael**
**The BOC Group plc,**
**Chertsey Road**
**Windlesham,**
**Surrey GU20 6HJ (GB)**

(54) **Process for consolidating a glass optical fibre preform**

(57)     A consolidation furnace is used in the forming of a glass preform for optical fibre manufacture. Inert gas, such as nitrogen, is directed over the seals of the consolidation furnace during the heating operation to convert the soot body into a consolidated preform. The inert gas will inhibit other gases from entering the consolidation furnace as well as inhibit the entry of contaminants into the furnace and reduce the loss of gases from the furnace. By inhibiting the entry of both additional gases and impurities, less helium needs to be employed in the consolidation process.

EP 1 717 212 A1

**Description**

BACKGROUND OF THE INVENTION

The present invention relates to a process for improving efficiency of the preform consolidation process in fiber optic manufacturing operations.

Glass preforms that are used to make optical fiber can be fabricated using the vertical axis deposition (VAD) or outside vapor deposition (OVD) methods. After the deposition step, the preform exists as a "soot" body of a porous matrix of silica particles that has a milky, opaque appearance. The soot body must be dried and consolidated to remove internal voidage and moisture, resulting in a clear glass rod which will ultimately be drawn into the optical fiber.

In some processes only the core and cladding are deposited and then consolidated. After consolidation, additional cladding may be added as an overcladding step to build the preform to the desired diameter before drawing. Depending on the cladding process, additional soot may be deposited on the outside of the consolidated core, requiring an additional consolidation step.

During consolidation, the soot body is placed inside a furnace typically consisting of a quartz muffle. The furnace is heated to above the sintering temperature of the glass, usually above ~2100°C, and helium gas is fed through the muffle tube to aid in heat transfer to the soot. The helium also serves to sweep away moisture and other impurities released by the soot as it heats and consolidates.

At some point in the process of consolidation, a gas mixture of helium and chlorine is passed through the porous glass to remove impurities and reduce the water content of the glass to a parts per billion level. This step is particularly critical in the production of preforms used to make low-water peak fiber (LWPF). The dehydration gases used in the consolidation process include chlorine and chlorine-containing compounds such as $SOCl_2$ and $CCl_4$.

Large amounts of helium are consumed during the typical consolidation process and the helium is typically captured, treated and vented. This can cause higher costs to the fiber optic manufacturer because helium is relatively expensive. The present invention is directed to providing a solution to the problem of helium loss during the consolidation process, as well as inhibiting the introduction of impurities into the furnace.

SUMMARY OF THE INVENTION

According to the present invention there is provided a method for reducing the loss of gases from and/or the ingress of impurities into a consolidation furnace during the consolidation of a soot body into a glass preform comprising directing an inert gas stream (from an external source) at the seals of the consolidation furnace.

The advantages offered by the invention as described include the use of higher purity helium and chlorine further reducing the amount of impurities present in the consolidation furnace and less impurities that must be removed from the furnace. Less moisture and oxygen enter the consolidation furnace thereby speeding drying time and producing a purer preform. The inhibition of gas leaks around the seals allows for a reduction in helium flow in the initial stages of consolidation to prevent heat loss thereby speeding the heating process.

DETAILED DESCRIPTION OF THE INVENTION

The present invention is directed to the problem of gas and impurities ingress into a consolidation furnace during the manufacture of an optical fiber preform.

The consolidation of a preform for use in fiber optic drawing operations requires that a soot body be heated in a consolidation furnace to dry and be consolidated to remove moisture and internal voidages.

The consolidation process will utilize a number of gases in order to purge the furnace, add ingredients to the soot body and to aid in vitrification and drying. As such the exhaust gas mixture exiting the consolidation furnace will include helium, chlorine, hydrochloric acid, nitrogen, oxygen, water and occasionally fluorine-containing gases.

The consolidation process begins with the lowering of the soot body into the furnace. The furnace is typically a quartz muffle which can withstand the temperatures necessary to heat and dry the soot body. The quartz muffle will typically have a gas input line and a gas output line with seals around these lines. Further, the top of the quartz muffle is removable in order to lower the soot body into the muffle and the bottom portion will also be jointed such that seals are necessary around the top and the bottom of the quartz muffle.

Because of the high temperatures (~2100°C) that the quartz muffle is subject to, the seals typically allow for expansion which can result in moisture and air entering the furnace. These contaminants will cause for a inefficient drying process as well as problems with the preform.

To understand the benefit of the present invention, one must look at the chemical equilibrium that governs the drying process. The reduction of moisture (hydroxyl groups) in silica is believed to result from the competing reactions

$$H_2O\ (g) + Cl_2\ (g) = 2HCl\ (g) + 1/2\ O_2\ (g) \qquad\qquad (1),$$

and

$$H_2O\ (g) + [Si\text{-}O\text{-}Si] = 2[Si\text{-}OH] \qquad\qquad (2).$$

As Reactions 1 and 2 proceed an equilibrium develops that can be described by

$$C_{SiOH}\ \alpha\ \frac{[P_{HCl}][P_{O2}]^{1/4}}{[P_{Cl2}]^{1/2}} \qquad\qquad (3).$$

As the drying step proceeds the equilibrium is controlled by the conversion of residual moisture in the drying gas, not in the soot, and Equation (3) can be rewritten

$$C_{SiOH}\ \alpha\ \frac{[P_{H2O}]^{1/2}\ [P_{O2}]^{1/4}}{[P_{Cl2}]^{1/2}} \qquad\qquad (4),$$

where $P_i$ is the partial pressure of constituent "i" in the vapor phase.

In view of equation (4) above, some important requirements for any process according to the invention to make ultra-dry silica are as follows. First, the chlorine concentration in the drying atmosphere should be quite high, although not higher than allowed by the critical diameter of the pores in the soot body. Secondly, the concentrations of moisture and oxygen in the drying atmosphere must be extremely low.

The present invention addresses this problem of leakage around the seals of the quartz muffle by directing jets or curtains of inert gas from a manifold over the seals. The inert gas may be selected from the group of nitrogen, argon, helium, neon, and carbon dioxide with nitrogen preferred.

The inert gas may be heated prior to it being directed towards the seals of the quartz muffle. The inert gas may be continuously directed at the seals of the quartz muffle as the muffle will remain heated during the process of inserting, heating and removing the soot body.

The inert gas is directed at the seals at a rate sufficient to inhibit loss of helium and ingress of impurities from the consolidation furnace.

The inert gas is directed at the seals at a rate of about 1 to about 100 standard liters per minute.

While this invention has been described with respect to particular embodiments thereof, it is apparent that numerous other forms and modifications of the invention will be obvious to those skilled in the art. The appended claims in this invention generally should be construed to cover all such obvious forms and modifications which are within the true spirit of the present invention.

**Claims**

1. A method for reducing the loss of gases from a consolidation furnace during the consolidation of a soot body into a glass preform comprising directing an inert gas stream at the seals of said consolidation furnace.

2. A method as claimed in claim 1, wherein said consolidation furnace comprises a quartz muzzle.

3. A method as claimed in claim 1 or claim 2, wherein said consolidation furnace has an inlet gas line and an outlet gas line.

4. A method as claimed in any one of the preceding claims, wherein said seals are at the top and bottom of said consolidation furnace.

5. A method as claimed in claim 4, wherein said seals are around said inlet gas line and said outlet gas line.

6. A method as claimed in any one of the preceding claims, wherein said inert gas is selected from the group consisting of nitrogen, argon, helium, neon and carbon dioxide.

7. A method as claimed in any one of the preceding claims, wherein said inert gas is dry.

8. A method as claimed in any one of the preceding claims, wherein said inert gas is warmed before being directed towards said seals.

9. A method as claimed in any one of the preceding claims, wherein said inert gas is directed at said seals at a rate sufficient to inhibit loss of gases from said consolidation furnace.

10. A method as claimed in any one of the preceding claims, wherein said inert gas stream reduces the ingress of impurities into said consolidation furnace.

**European Patent Office**

**EUROPEAN SEARCH REPORT**

Application Number

EP 06 11 3089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/50197 A (SUMITOMO ELECTRIC INDUSTRIES, LTD; KONISHI, HIROAKI; ITO, MASUMI; MATS) 7 October 1999 (1999-10-07) | 1-4,6-10 | INV. C03B37/014 |
| Y | * the whole document * | 5 | |
| X | US 6 543 257 B1 (KOAIZAWA HISASHI ET AL) 8 April 2003 (2003-04-08) | 1-3,6-10 | |
| Y | * column 29, line 60 - column 32, line 46; claim 1; figure 2 * | 5 | |
| X | PATENT ABSTRACTS OF JAPAN vol. 014, no. 492 (C-0773), 26 October 1990 (1990-10-26) & JP 02 204339 A (SUMITOMO ELECTRIC IND LTD), 14 August 1990 (1990-08-14) * abstract * | 1,3,6,9,10 | |
| X | PATENT ABSTRACTS OF JAPAN vol. 012, no. 433 (C-543), 15 November 1988 (1988-11-15) & JP 63 159232 A (MITSUBISHI CABLE IND LTD), 2 July 1988 (1988-07-02) * abstract * | 1,3,6,9,10 | TECHNICAL FIELDS SEARCHED (IPC)<br><br>C03B |
| X | PATENT ABSTRACTS OF JAPAN vol. 016, no. 176 (C-0934), 27 April 1992 (1992-04-27) & JP 04 021535 A (FURUKAWA ELECTRIC CO LTD:THE), 24 January 1992 (1992-01-24) * abstract * | 1,3,6,9,10 | |

The present search report has been drawn up for all claims

| Place of search | Date of completion of the search | Examiner |
|---|---|---|
| The Hague | 22 August 2006 | Stroud, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 3089

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2006

| Patent document cited in search report | | Publication date | Patent family member(s) | | Publication date |
|---|---|---|---|---|---|
| WO 9950197 | A | 07-10-1999 | AU 2958499 A | | 18-10-1999 |
| | | | JP 2002211943 A | | 31-07-2002 |
| US 6543257 | B1 | 08-04-2003 | NONE | | |
| JP 02204339 | A | 14-08-1990 | NONE | | |
| JP 63159232 | A | 02-07-1988 | NONE | | |
| JP 04021535 | A | 24-01-1992 | JP 2831802 B2 | | 02-12-1998 |

For more details about this annex : see Official Journal of the European Patent Office, No. 12/82

EPO FORM P0459